Europäisches Patentamt

European Patent Office

Office européen des brevets

(19)

(11) Veröffentlichungsnummer: **0 248 791**
**B1**

(12) **EUROPÄISCHE PATENTSCHRIFT**

(45) Veröffentlichungstag der Patentschrift: **12.09.90**

(21) Anmeldenummer: **86900001.8**

(22) Anmeldetag: **10.12.85**

(86) Internationale Anmeldenummer:
**PCT/AT85/00055**

(87) Internationale Veröffentlichungsnummer:
**WO 87/03577 18.06.87 Gazette 87/13**

(51) Int. Cl.⁵: **C 04 B 22/00, C 04 B 28/00,
C 04 B 40/00**

(54) **TROCKENMÖRTELGEMISCH.**

(43) Veröffentlichungstag der Anmeldung:
**16.12.87 Patentblatt 87/51**

(45) Bekanntmachung des Hinweises auf die
Patenterteilung: **12.09.90 Patentblatt 90/37**

(84) Benannte Vertragsstaaten:
**BE CH DE FR GB IT LI LU NL SE**

(56) Entgegenhaltungen:
**DE-A-3 303 217
FR-A- 632 568
FR-A-1 492 242
GB-A- 355 902
GB-A-1 592 348
US-A-2 254 252
US-A-2 733 995
US-A-3 649 317
US-A-4 441 944**

(73) Patentinhaber: **ALLGEMEINE
BAUGESELLSCHAFT - A. PORR
AKTIENGESELLSCHAFT
Rennweg 12
A-1031 Wien (AT)**

(72) Erfinder: **JUNG, Fritz
Innstrasse 15
A-1200 Wien (AT)**

(74) Vertreter: **Pfeifer, Otto, Dipl.-Ing. et al
Patentanwälte, Dipl.-Ing. Dr. techn. Schütz,
Alfred, Dipl.-Ing. Holzer, Walter Dipl.-Ing. Pfeifer,
Otto Fleischmanngasse 9
A-1040 Wien (AT)**

Courier Press, Leamington Spa, England.

## Beschreibung

Die vorliegende Erfindung bezieht sich auf ein Trockenmörtengemisch zur Ausbildung korrosionsschützender Überzüge auf vertikalen, horizontalen oder geneigten Flächen von Betonbauwerken, bestehend aus mindestens einem anorganischen, hydraulischen oder nichthydraulischen Bindemittel sowie gegebenenfalls aus mindestens einem üblichen Zuschlagstoff, einem pulverförmigen, in Flüssigkeit dispergierten oder in flüssiger Form vorliegenden Kunststoff, einem die Frost- und Frosttaubeständigkeit erhöhenden Zusatz, einem färbenden Zusatz, Fasern und/oder weiteren üblichen Zusatzstoffen, wie z.B. natürliche oder künstliche Puzzolane, Hochofenschlacke und/oder üblichen Betonzusatzmitteln, wie Verflüssiger, Fließmittel, Dichtungsmittel, Korrosionsinhibitoren und ähnliches.

Bei Bauwerken, insbesondere aus Beton, kommt es durch ein verstärktes Eindiffundieren von $CO_2$ und $SO_2$ aus der Luft in die oberflächennahen Zonen zu einer Zunahme von Oberflächenschäden. Die $CO_2$-Diffusion führt zu einer Karbonatisierung, in der Folge zu einem Schwund der Alkalität und schließlich zu einer Korrosion der Stahleinlagen. Die $SO_2$-Diffusion führt zu Gips- bzw. Ettringitbildung und damit zu einem nachteiligen Treiben des Betons. Zufolge einer oft mangelhaften Nachbehandlung werden diese Probleme zusätzlich vergrößert. Hierbei kommt es zur Ausbildung einer hohen Porosität in den oberflächennahen Zonen, wodurch die $CO_2$- und $SO_2$-Diffusion zusätzlich begünstigt wird.

Verschärft werden die vorstehend aufgezeigten Probleme durch die zunehmende Verwendung dünnwandiger Bauteile, die häufig noch auf wärmedämmenden Schichten aufgebracht sind, z.B. bei Sandwichplatten, und durch die dabei auftretenden hohen Spannungen bei einem Temperaturwechsel.

Zur Beseitigung dieser Nachteile ergibt sich die Forderung nach einem hochfesten Überzug, der sowohl eine gute Haftfestigkeit am Untergrund als auch einen hohen Widerstand gegen eine Gasdiffusion aufweisen soll. Diese Ziele können teilweise durch Kunststoffbeschichtungen bzw. -anstriche erreicht werden. Kunststoffbeschichtungen bzw. -anstriche weisen aber den Nachteil auf, daß bei ihrer Beschädigung der Angriff sofort an der alten Front weitergeht und daß sich die physikalischen Eigenschaften des Überzugs, insbesondere hinsichtlich Wärmeausdehnungen, Wasserdampfdurchlässigkeit, Alterung (Versprödung) usw. stark von denen des Betons unterscheiden.

Ein weiterer Versuch, die vorstehend angeführten Nachteile zu überwinden, wurde mit einem Aufbringen betonähnlicher Schichten unternommen. Die hiefür eingesetzten sogenannten mineralischen Dichtungsschlämme aus Zement/Sand/Wasser bzw. die sogenannten flexiblen Schlämme aus Zement/Sand/Kunststoff/Wasser verhalten sich zwar besser als die reinen Kunststoffüberzüge, sie können aber nur in relativ geringer Schichtstärke aufgebracht werden, wodurch die Gasdiffusion in den meisten Fällen nicht ausreichend gehemmt wird bzw. das mit solchen Schlämmen eingebrachte "Alkalidepot" den Schwund der Alkalität nicht ausgleichen kann.

Aus der DE—OS 28 56 764 ist ferner eine Beton- oder Mörtelmischung bekannt, die mindestens ein anorganisches Bindemittel sowie mindestens einen Tieftemperaturklebrigkeit aufweisenden Kunststoff enthält, wobei zumindest ein Teil der Zuschläge durch Partikel oder Formkörper aus organischem Material, insbesondere aus Kunststoff, gebildet ist. Eine solche Zusammensetzung soll eine große Temperaturwechselbeständigkeit aufweisen, unter Beibehaltung der vollen Leistungsfähigkeit, und überdies auch bei Temperaturen unter 0°C ein wesentlich besseres elastisches Verhalten zeigen als früher verwendete Betone oder Mörtel.

Eine ähnliche Aufgabenstellung liegt der DE—OS 28 27 382 zu Grunde, nämlich die Herstellung von gegen Schlagbeanspruchung, Abrieb und Frost-Tauwechsel unempfindlichen Bauteilen und/oder Belägen aus Beton. Zur Lösung dieser Aufgabe wird ein Bindemittel bzw. ein Beton oder Mörtel vorgeschlagen, das bzw. der aus mindestens einem hydraulischen Bindemittel sowie mindestens einem Kunststoff mit einem bestimmten $T_{max}$-Wert besteht und gegebenenfalls zusätzlich Bitumen und/oder Teer enthalten kann.

Nach der DE—OS 26 32 691 bzw. der AT—PS 353 156 soll ein Zement mit gesteigerter Endfestigkeit zur Verfügung gestellt werden. Zur Erreichung dieses Zieles wird ein Zement aus Portlandzementklinker und Mergelklinker mit einem Gehalt an kalkarmen, hydratisierfähigen Mineralphasen vorgeschlagen.

Der AT—PS 305 871 wiederum liegt die Aufgabe zu Grunde, einen Quellzement herzustellen. Das beschriebene Verfahren zur Herstellung des quellfähigen, freikalkhaltigen Portlandzements besteht im wesentlichen darin, daß ein Portlandzementklinker während einer bestimmten Zeit in einem festgelegten Temperaturbereich gehalten wird und anschließend dem derart nachbehandelten Portlandzementlinker Gips und gegebenenfalls übliche Zusatzstoffe sowie gegebenenfalls ein Portlandzementlinker üblicher Zusammensetzung beigemischt werden.

Aus der DE—OS 33 03 217 ist ferner ein Beschichtungsmaterial bekannt, welches gemahlenen gebrannten hydraulischen oder hochhydraulischen Kalk ohne Sulfatzusatz enthält. Dieser Kalk liegt bevorzugt in einer Korngröße zwischen 20 bis etwa 50 μm vor.

Nach der GB—PS—355 902 sollen Portlandzement, Tonerdezement, Spezialzement oder -mörtel und damit hergestellter Beton gegen Wasser widerstandsfähig gemacht werden, das Erhärten soll beschleunigt werden, die Härte soll gesteigert werden und das Schwinden soll begrenzt werden. Als die Zerstörung von Portlandzement und Betonbauten verursachende agressive Wässer sind insbesondere sauer Abwässer von Fabriken und Sulfate oder freie Kohlensäure oder Gemische davon enthaltende Grund- und Bergwässer angeführt, ebenso Thermalwässer, insbesondere sulfathaltige. Zur Lösung der Aufgabe, Portlandzement und damit hergestellten Mörtel und Beton gegenüber diesen aggressiven Wässern beständig zu machen, muß der zur Betonherstellung eingesetzte Zement einen angemessenen Prozentsatz von Klinker mit einer größeren Korngröße als üblich enthalten, insbesonders mehr als 3% mit Durchmesser 0,25 bis 2,0 mm, und der sich daraus ergebende Zement wird dann mit oder ohne Zusatz von Sand oder Kies verarbeitet.

Auch mit den vorstehend erwähnten Mitteln läßt sich das Ziel der vorliegenden Erfindung, einen hochfesten Überzug zu schaffen, der sowohl eine gute Haftfestigkeit am Untergrund als auch einen hohen Widerstand gegen eine Gasdiffusion aufweist und der insbesondere zum Ausgleich des Alkalitätsschwundes ein ausreichendes Alkalidepot einbringt, nicht erreichen.

Aufgabe der vorliegenden Erfindung war es daher, ein Trockenmörtelgemisch zur Ausbildung korrosionsschützender Überzüge auf vertikalen, horizontalen oder geneigten Flächen von Betonbauwerken zu schaffen, das zu einer ausreichend festen, aber doch einen niedrigen E-Modul aufweisenden Schicht führt, die auch in stärkeren Schichtdichten von z.B. 10 mm aufgetragen werden kann, die einen hohen Widerstand gegen eine $CO_2$— und $SO_2$-Diffusion aus der Luft in den Beton besitzt und ein ausreichendes Alkalidepot einbringt und die eine hohe Haftfestigkeit am Untergrund aufweist, die aber in ihren physikalischen Eigenschaften trotzdem relativ wenig vom Betonuntergrund abweicht.

Diese Aufgabe wird mit einem Trockenmörtelgemisch der eingangs genannten Art gelöst, das sich dadurch auszeichnet, daß es zusätzlich zum anorganischen Bindemittel 2 bis 75 Gew.-% bezogen auf die Masse des Trockenmörtelgemisches, eines grobkörnigen Portlandzementklinkers mit einem Dikalziumsilikatgehalt von über 30% enthält.

Als anorganisches Bindemittel enthält das erfindungsgemäße Trockenmörtelgemisch zweckmäßig Portlandzement üblicher Zusammensetzung, Eisenportlandzement, Hochofenzement, erhöht sulfatbeständigen Zement, Wießzement, Tonerdezement, modifizierten Portlandzement auf Basis von $11CaO.7Al_2O_3.CaF_2$, Schnellzement, Brunauerzement, Grenoblezement, hochhydraulischen oder hydraulischen Kalk, Romankalk, Wießkalk und/oder kaustischen Magnesit.

Vorteilhaft liegt in dem erfindungsgemäßen Trockenmörtelgemisch als anorganisches Bindemittel ein Gemisch von 30 bis 95% Zement mit 70 bis 5% Kalk, vorzugsweise von 50 bis 90% Zement mit 50 bis 10% Kalk vor.

Als üblicher Zuschlagstoff kann in dem erfindungsgemäßen Gemisch zweckmäßig ein Sandgemisch enthalten sein, mit einem auf die spätere Anwendungsdicke abgestimmten Größtkorn zwischen 1 und 8 mm, wobei die Körnungsverteilung des Sandes so gewählt ist, daß sie für das Größtkorn 4 mm und 8 mm in den brauchbaren oder besonders bevorzugt in den günstigen Bereich gemäß ÖN B 3304, für ein anderes Größtkorn in einen sinngemäßen Bereich fällt.

In dem erfindungsgemäßen Trockenmörtelgemisch soll die Reaktion des die Alkalität erhöhenden Portlandzementklinkers bei einer Erhärtungstemperatur von 20°C zu über 25%, vorzugsweise zu über 40%, insbesondere zu über 60% erst in einem Erhärtungsalter des Trockenmörtelgemisches von mehr als 28 Tagen einsetzen.

Der die Alkalität erhöhende grobkörnige Portlandzementklinker weist vorzugsweise einen Gehalt an Trikalziumaluminat von unter 5%, insbesondere unter 3% und besonders bevorzugt unter 1% auf. Dieser Klinker reagiert wegen seiner groben Korngröße sehr langsam. Jedes Mal, wenn der Überzug durchfeuchtet wird, gibt der Klinker neues Kalziumhydroxid ab und erneuert dadurch die Alkalität und verhindert eine Korrosion. Auch Risse können durch eine solche langsame Hydratation des Klinkers bis zu einem gewissen Grad geschlossen werden, wie dies etwa bei Betonrohren zu beobachten ist.

Im erfindungsgemäßen Trockenmörtelgemisch ist als Alkalitätsreserve vorzugsweise ein Portlandzementklinker mit einem sehr hohen Dikalziumsilikatgehalt von über 45%, insbesondere über 55% enthalten. Durch diesen hohen Dikalziumsilikatgehalt wird die angestrebte langsame Reaktionsgeschwindigkeit erreicht.

Der erfindungsgemäß als Alkalitätsresere eingesetzte grobkörnige Portlandzementklinker weist eine Korngröße von 0,06 bis 8 mm, vorzugsweise 0,06 bis 4 mm, insbesondere 0,1 bis 1 mm auf.

Weiterhin hat es sich als vorteilhaft erwiesen, die Sieblinie des üblichen Zuschlagstoffes so zu wählen, daß das Volumen des körnigen, die Alkalität erhöhenden Portlandzementklinkers bei der Erstellung der Sieblinie für den üblichen Zuschlagstoff Berücksichtigung findet.

Bezüglich der mengenmäßigen Zusammensetzung zeichnet sich das erfindungsgemäße Trockenmörtelgemisch dadurch aus, daß es 2 bis 75%, vorzugsweise 5 bis 50%, insbesondere 10 bis 25% grobkörnigen Portlandzementklinker, bezogen auf die Masse des Trockenmörtelgemisches, enthält.

Zusätzlich kann das Trockenmörtelgemisch einen pulverförmigen, in Flüssigkeit dispergierten und/oder in gelöster Form vorliegenden Kunstoff enthalten. Der Anteil an Kunststoff kann dabei in weiten Grenzen schwanken, je nach dem gewünschten E-Modul. Beispielsweise kann, sofern eine sehr hohe Bruchdehnung notwendig erscheint, der Kunststoffanteil bis 60% Masse bzw. sogar noch etwas höher betragen, sodaß in diesen Gemischen das anorganische Bindemittel sogar zumindest teilweise als Füller wirkt. Auch in diesen Mischungen ist jedoch die Aufrechterhaltung der Alkalität durch den erfindungsgemäßen Zusatz des grobkörnigen Portlandzementklinkers gegeben. In der Regel wird allerdings, schon aus Kostengründen, ein Kunststoffgehalt von 1 bis 10% Masse bzw. von 2 bis 4% Masse ausreichend sein, weswegen diese Bereiche besonders bevorzugt erscheinen. Vorteilhaft wird in allen Fällen ein pulverförmiger, in Flüssigkeit dispergierter und/oder in gelöster Form vorliegenden Kunststoff

mit einem $T_{\lambda max}$-Wert, ermittelt nach DIN 53 445, von weniger als −8°C, insbesondere weniger als −12°C, eingesetzt.

Als die Frost- und Frosttausalzbeständigkeit erhöhende Zusatzstoffe können in dem Trockenmörtelgemisch Festkörper enthalten sein, die entweder bereits Poren enthalten und/oder in denen während des Erhärtungsvorganges Poren entstehen, wobei das Porenvolumen 0,3 bis 6%, vorzugsweise 0,5 bis 4%, insbesondere 0,5 bis 2%, bezogen auf das Volumen des Trockenmörtelgemisches, beträgt. Die in dem zugesetzten Festkörper enthaltenen und/oder entstehenden Poren weisen hiebei zweckmäßig überwiegend Duchmesser von 20 bis 200 µm, vorzugsweise von 25 bis 100 µm, insbesondere von 30 bis 70 µm auf.

Das erfindungsgemäße Trockenmörtelgemisch kann in einfacher Weise mit Fasern bewehrt werden, beispielsweise mit Glasfasern, Kunststoffasern oder beschichteten bzw. nichtrostenden Stahlfasern, und kann mit Farbpigmenten gefüllt werden. Als färbende Zusätze eignen sich beispielsweise anorganische und/oder organische Farbpigmente in einer Menge von 0,05 bis 2%, vorzugsweise 0,1 bis 1,5%, bezogen auf die Masse des Trockenmörtelgemisches.

Das erfindungsgemäß Trockenmörtelgemisch zeichnet sich selbst bei größerer Schichtstärke von z.B. 10 mm durch eine hohe Haftfestigkeit am Untergrund aus, zeigt ähnliche physikalische Eigenschaften (Wärmedehnungskoeffizient, Wasserdampfdurchlässigkeit, Alterung, Verhalten bei verschiedenen Temperaturen usw.) wie der Betonuntergrund und besitzt zufolge des Kunststoffzusatzes eine hohe Widerstandsfähigkeit gegen $SO_2$- und $CO_2$-Diffusion. Durch den Gehalt an grobkörnigem Klinker wird die Alkalität bei Bedarf stets erneuert, worduch insbesondere ein Korrosion der Betonarmierung verhindert wird.

Überraschenderweise hat sich weiterhin gezeigt, daß ein erfindungsgemäß modifizierter Mörtel einen wesentlich erhöhten Widerstand gegen Chloriddiffusion aufweist, was bei Chloridbelastung, etwa durch Tausalz u.dgl., von größer Bedeutung ist. Durch eine entsprechende Variation des Zement/Kalk-Verhältnisses und mit Hilfe des Kunststoffzusatzes kann der Elastizitätsmodul im erforderlichen Ausmaße abgestimmt und damit eine hohe Bruchdehnung erzielt werden. Weiterhin ist ein aus dem erfindungsgemäßen Trockenmörtelgemisch hergestellter Überzug leicht verarbeitbar, z.B. durch Spritzen, Spachteln oder dergleichen, wobei ein Auftrag in hohen oder niedrigen Schichten erfolgen kann. Der Mörtel wird hierbei von Hand oder maschinell, etwa mit einer handelsüblichen Putzmaschine, vorzugsweise einer Schneckenpumpenmaschine, auf die zu schützende Oberfläche aufgetragen und abgezogen. Um die alkalitätserhöhende Wirkung des erfindungsgemäßen Mörtels voll zu Geltung kommen zu lassen, hat es sich als günstig erwiesen, eine Schichtauftragsstärke von etwa 0,5 bis einige cm zu wählen, vorzugsweise etwa 1 bis 1,5 cm. Natürlich ist auch eine geringere Schichstärke ausführbar, jedoch kommt dann die Korrosionsschutzwirkung weniger zur Geltung. Zweckmäßigerweise wird der Mortel anschließend an das Abziehen mit einem Verdunstungsschutz überzogen. Dieser Nachbehandlungsfilm kann durch Sprühen, Streichen o.dgl. aufgetragen werden. Der Nachbehandlungsfilm kann, wenn er einen erhöhten Widerstand gegen $CO_2$- und/oder $SO_2$-Diffusion aufweist, die Korrosionswirkung des Trockenmörtels weiter erhöhen.

Die nachfolgenden Beispiele sollen die Erfindung näher erläutern.

Beispiel 1

Betonplatten mit den Abmessungen 20×20×10 cm wurden im Alter von 8 Monaten mit verschiedenen Überzügen versehen. Der Beton war mit PZ 275 (H) hergestellt worden, besaß einen w/z-Wert von 0,67 und wies zum Zeitpunkt des Überzugs eine mittlere Karbonatisierungstiefe von 10 mm auf. Die Art der Überzüge und deren Einfluß auf die weitere Zunahme der Karbonatisierungstiefe ist aus Tabelle 1 zu erkennen, wobei die überzogenen Platten im Freien im Stadtgebiet gelagert worden sind.

Als Kunststoff wurde dabei eine pulverförmige Acrylharzdispersion, als Klinker bei den Versuchen 3 bis 9 ein Portlandzementklinker mit einem Dikalziumsilikatgehalt von 35%, bei Versuch 10 von 48% und bei Versuch 11 von 56% eingesetzt.

Wie aus der Tabelle 1 hervorgeht, hat der Zusatz des grobkörnigen Klinkers den Karbonatisierungsfortschritt insbesondere zu den späten Terminen wesentlich herabgesetzt. Die Wirkung war deutlich größer als bei einem handelsüblichen Korrosionsshutzüberzug.

4

TABELLE 1

| | | Zusammensetzung des Überzuges (wasserfrei gerechnet) in % Masse (Stärke 8 mm) | | | | | mittlere Zunahme der ursprünglichen Karbonatisierungstiefe von 10 mm um...mm nach | | |
|---|---|---|---|---|---|---|---|---|---|
| Nr. | PZ 275 (H) | grobkörniger PZ-Klinker 0,1/1 | 1/4 | üblicher Sand 0,1/1 | 1/4 | Kunst-stoff | 1 Jahr | 2 Jahren | 3 Jahren |
| 0 | ohne Überzug | | | | | | 10 | 19 | 30 |
| 1 | 30% | — | — | 25% | 45% | — | 3 | 14 | 24 |
| 2 | 27,5% | — | — | 24% | 45% | 3,5% | 2 | 10 | 18 |
| 3 | 27,5% | 4% | — | 20% | 45% | 3,5% | 2 | 8 | 14 |
| 4 | 27,5% | 8% | — | 16% | 45% | 3,5% | 1 | 5 | 8 |
| 5 | 27,5% | 20% | — | 4% | 45% | 3,5% | 1 | 3 | 4 |
| 6 | 27,5% | 24% | 30% | — | 15% | 3,5% | 1 | 2 | 2 |
| 7 | 31% | 24% | 30% | — | 15% | — | 1 | 4 | 4 |
| 8 | 31% | 24% | 45% | — | — | — | 2 | 4 | 5 |
| 9 | 29,5% | 24% | 30% | — | 15% | 1,5% | 2 | 5 | 5 |
| 10 | 29,5% | 20% | — | 4% | 45% | 1,5% | 2 | 4 | 4 |
| 11 | 29,5% | 20% | — | 4% | 45% | 1,5% | 1 | 3 | 4 |
| 12 | handelsüblicher Korrosionsschutzüberzug aus Kunststoff | | | | | | 5 | 10 | 19 |

Beispiel 2:

Eine Stahlbetonfassadenplatte (2×5 m, w/z=0,65) wurde in zehn gleichartige und in gleicher Weise der Witterung ausgesetzte, 50 cm breite Abschnitte unterteilt. Die Betonüberdeckung lag in allen Fällen bei 10 mm. Im Alter von 2 Jahren—die Karbonatisierungstiefe betrug zu diesem Zeitpunkt einheitlich 5—6 mm—wurden 8 der Abschnitte mit Überzügen 1t. Tabelle 2 versehen. Die Beobachtung des weiteren Fortschritts der Karbonatisierung sowie des Verhaltens der Stahlbewehrung erbrachte die in Tabelle 2 festgehaltenen Resultate.

Wie daraus hervorgeht, hat der Überzug der Platte mit den erfindungsgemäßen, grobkörnigen Klinker enthaltenden Mörteln die Karbonatisierungsgeschwindigkeit wesentlich herabgesetzt und eine Korrosion der Stahlbewehrung verhindert.

TABELLE 2

| Abschnitt | PZ 275 (H) | grobkörniger Klinker 0,15/1 | grobkörniger Klinker 1/4 | üblicher Sand 0/1 | üblicher Sand 1/4 | Kunststoff | Karbonatisierungstiefe (mm) nach Aufbringen des Überzugs nach 0 | 1 Jahr | 2 Jahren | 3 Jahren | Beschaffenheit der Stahlbewehrung 1a | 2a | 3a |
|---|---|---|---|---|---|---|---|---|---|---|---|---|---|
| 0 | ohne Überzug | | | | | | 5—6 | 13 | — | — | sR/A | — | — |
| 1 | 45 % | — | — | 25% | 30% | — | 5—6 | — | 15 | — | 0 | sR/A | — |
| 2 | 40,5% | — | — | 25% | 30% | 4,5% | 5—6 | — | 11 | — | 0 | sR/A | — |
| 3 | 40,5% | 25% | — | — | 30% | 4,5% | 5—6 | — | — | — | 0 | 0 | 0 |
| 4 | handelsüblicher Überzug I auf Kunststoffbasis | | | | | | 5—6 | — | 12 | — | 0 | sR/A | — |
| 5 | handelsüblicher Überzug II auf Kunststoffbasis | | | | | | 5—6 | — | 14 | — | 0 | sR/A | — |
| 6 | 40,5%*) | 25% | — | — | 30% | 4,5% | 5—6 | — | — | — | 0 | 0 | 0 |
| 7 | 40,5% | 25%+) | — | — | 30% | 4,5% | 5—6 | — | — | — | 0 | 0 | 0 |
| 8 | 40,5%**) | 25% | — | — | 30% | 4,5% | 5—6 | — | — | — | 0 | 0 | 0 |

*) Schnellzement
**)=30% Zement+10,5% Kalkhydrat
+) $C_3A$-armer Klinker

sR=starke Risse
A=Abplatzungen
0=keine sichtbaren Schäden
=Doppelabschnitt

Beispiel 3:

Für die Untersuchung wurden herangezogen gleichartige Betonkörper mit den Abmessungen 12×12×36 (cm) und einem w/z-Wert von 0,64. Von diesen wurden im Alter von 6 Monaten der Körper 1 mit einem handelsüblichen Korrosionsschutzanstrich versehen, der Körper 2 mit einem erfindungsgemäß zusammengesetzten, 9 mm starken Überzug aus 30% Portlandzement PZ 275 (H), 28% grobkörnigem Klinker der Korngröße 0,2/1 mm mit einem Trikalziumalkuminatgehalt von 2,2%, 3% Copolymerkunststoff aus Basis Styrol-Butadien, 37,5% Kalksteinsand 1/4 mm und 1,5% üblichem Fließmittel (wasserfrei gerechnet). Der Körper 3 wurde mit einem Überzug versehen, der sich von dem Überzug für Körper 2 nur dadurch unterschied, daß statt des Portlandzementes PZ 275 (H) ein Portlandzement mit einem Trikalziumaluminatgehalt von 0% eingesetzt worden war. Körper 4 blieb ohne Überzug.

Alle Körper wurden einer leicht mit $SO_2$ angereicherten Atmosphäre im Freien ausgesetzt (Nähe einer Müllverbrenungsanlage). Nach 1 1/2 Jahren wies der Körper 4 starke Treibrisse und beginnenden Zerfall auf. Auch bei Körper 1 waren Schäden zu erkennen (an den Kanten und Ecken starke Aufwölbungen, zahlreiche Treibrisse). Bei Körper 2 waren lediglich 2 Haarrisse von 3 bzw. 4,5 mm Länge zu erkennen, bei Körper 3 waren keine Schäden sichtbar.

Die erfindungsgemäßen Überzüge haben demnach wesentlich zum Schutz der Betonkörper beigetragen.

Beispiel 4

Für die Untersuchung wurden wiederum Betonkörper mit den Abmessungen 12×12×36 (cm) und einen w/z-Wert von 0,64 herangezogen. Diese wurden im Alter von 6 Monaten mit einer 10 mm starken Schicht überzogen, die sich aus 30% Portlandzement 275 (H), 38% Kalksteinsand 1/4 mm und 29,5% "Feinkorn 0,1/1 mm mit Alkalitätsreserve" zusammensetzte. Als weitere Zusätze wurden verwendet 0,5% eines Copolymerkunststoffs auf Basis Styrol-Butadien, sowie 1% Fasern, 0,4% Methylzellulose und 0,6% Thixotropiermittel. Als Feinkorn 0,1/1 mm mit Alkalitätsreserve wurde eingesetzt bei

Körper 1: Hochofenschlacke A
Körper 2: Hochofenschlacke B
Körper 3: Flugasche
Körper 4: Hydraulischer Kalk (Korngröße 0,25/1)
Körper 5: Spezialdolomitkalk
Körper 6: Portlandzementklinker
Körper 7: Kalksteinsand (Vergleichsprobe)

Die chemische Zusammensetzung dieser Stoffe war (auf glühverlustfreien Zustand bezogen):

|  | $SiO_2$ | $Al_2O_3$ | $FeO+Fe_2O_3$ | CaO | MgO |
|---|---|---|---|---|---|
| Hochofenschlacke A | 33% | 12% | 0,6% | 45% | — |
| Hochofenschlacke B | 36% | 7% | 0,5% | 48% | — |
| Flugasche | 28% | 11% | 5,3% | 37% | — |
| Hydraulischer Kalk | 11% | 5% | 3% | 76% | — |
| Spezialdolomitkalk | 2% | 2% | 1% | 56%*) | 40% |

*) Wie eine röntgendiffraktometrische Untersuchung zeigte, liegt das gesamte CaO als inertes, unlösliches $CaCO_3$ vor. Die alkalitätserhöhende Wirkung des Spezialdolomitkalkes geht auf den Gehalt an reaktionsfähigem MgO zurück.

Alle Körper wurden einer mit $CO_2$ angereicherten Atmosphäre (Ausblasöffnung einer PKW-Garage) im Freien ausgesetzt. Zu Beginn des Vergleichsversuchs im Alter von 6 Monaten, d.h. beim Auftrag der Überzugsmörtel, wiesen die Körper eine mittlere Karbonatisierungstiefe von etwa 5 mm auf. 20 Monate nach dem Aufbringen der Überzugsmörtel war bei Vergleichskörper 7 der Überzugsmörtel in voller Stärke durchkarbonatisiert, die Karbonatisierung im Körper 7 selbst war auf im Mittel 11 mm angestiegen. Bei allen anderen Körpern wurde im Überzugsmörtel nur eine Karbonatisierungstiefe von 2 bis 4 mm festgestellt, an keiner Stelle hatte die Karbonatisierungsfront einen Wert von 5 mm überschritten.

Beispiel 5:

Für die Untersuchung wurden wie in Beispiel 4 Betonkörper mit den Abmessungen 12×12×36 (cm) und einem w/z-Wert von 0,64 herangezogen. Diese wurden im Alten von 6 Monaten mit einer 10 mm starken Schicht überzogen. Der Überzugsmörtel für diese Schicht setzte sich zusammen aus 25% Portlandzement 275 (H), aus weiteren 25% Alkalitätsreservekorn der Korngröße 0 bis 0,25 mm, aus 15% Kalksteinsand 0,2—0,8 mm und aus 35% Kalksteinsand 0,8 bis 1,4 mm. Als Alkalitätsreserven wurde eingesetzt bei

Körper 1: Portlandzement-Klinker mit 58% Dikalziumsilikat
Körper 2: Kalksteinfeinsand (Vergleichsprobe)
Körper 3: hier wurde statt des Überzugsmörtels ein handelsüblicher Korrosionsschutzanstrich eingesetzt.

Alle Körper wurden einer mit $SO_2$ und $CO_2$ angereicherten Atmosphäre im Freien ausgesetzt (Nähe einer Müllverbrennungsanlage). Zu Beginn des Vergleichsversuchs im Alter von 6 Monaten, d.h. beim Auftragen der Schutzschichten, wiesen die Körper eine mittlere Karbonatisierungstiefe von etwa 4 mm auf. Zwei Jahre nach dem Aufbringen der Schutzschichten war bei Körper 2 der Überzugsmörtel in voller Stärke durchkarbonatisiert, die Karbonatisierung im Körper 2 selbst war auf im Mittel 9 mm angestiegen.

Auch bei Körper 3 hatte die Karbonatisierungstiefe auf im Mittel 8 mm zugenommen. Bei Körper 1 war an dem Überzugsmörtel eine Karbonatisierungstiefe von nur 1—2 mm festzustellen, an dem Körper selbst war in der zur Zeit der Schutzmörtelaufbringung im Mittel 4 mm starken karbonatisierten Schicht wieder eine ausreichende Alkalität vorhanden, wie durch eine Anfärbung mit Phenolphthaleinlösung festgestellt werden konnte. Durch die Alkalitätsreserve des Überzugsmörtels war also nicht nur in diesem eine Karbonatisierung vermieden worden, es konnte vielmehr in dem ursprünglich karbonatisierten, mit dem Überzugsmörtel überzogene Beton wieder eine ausreichende Alkalität aufgebaut werden.

Im Gegensatz zu den in den bisherigen Beispielen beschriebenen, die Alkalität erhöhenden Stoffen ist der im vorliegenden Beispiel verwendete Portlandzementklinker relativ fein gemahlen. Es wurde die im Vergleich zu dem übrigen, im Bindemittel vorliegenden Portlandzementklinker langsame Reaktionsgeschwindigkeit nicht durch eine gröbere Korngröße erreicht, sondern dadurch, daß ein außergewöhnlich hoher Dikalziumsilikatgehalt von 58% eingestellt worden ist.

## Patentansprüche

1. Trockenmörtelgemisch zur Ausbildung korrosionsschützender Überzüge auf vertikalen, horizontalen oder geneigten Flächen von Betonbauwerken, bestehend aus mindestens einem anorganischen hydraulischen oder nichthydraulischen Bindemittel sowie gegebenenfalls aus mindestens einem üblichen Zuschlagstoff, einem pulverförmigen, in Flüssigkeit dispergierten oder in flüssiger Form vorliegenden Kunststoff, einem die Frost- und Frosttausalzbeständigkeit erhöhenden Zusatz, einem färbenden Zusatz, Fasern und/oder weiteren üblichen Zusatzstoffen, wie z.B. natürlichen oder künstlichen Puzzolanen, Hochofenschlacke und/oder üblichen Betonzusatzmitteln, dadurch gekennzeichnet, daß es zusätzlich zum anorganischen Bindemittel 2 bis 75 Gew.-%, bezogen auf die Masse des Trockenmörtelgemisches, eines grobkörnigen Portlandzementklinkers mit einem Dikalziumsilikatgehalt von über 30% enthält.

2. Trockenmörtelgemisch nach Anspruch 1, dadurch gekennzeichnet, daß der grobkörnige Portlandzementklinker einen Dikalziumsilikatgehalt von über 45% aufweist.

3. Trockenmörtelgemisch nach Anspruch 1 oder Anspruch 2, dadurch gekennzeichnet, daß der Portlandzementklinker einen Dikalziumsilikatgehalt von über 55% aufweist.

4. Trockenmörtelgemisch nach einem der Ansprüche 1 bis 3, dadurch gekennzeichnet, daß der grobkörnige Portlandzementklinker eine Korngröße von 0,06 bis 8 mm aufweist.

5. Trockenmörtelgemisch nach Anspruch 4, dadurch gekennzeichnet, daß der grobkörnige Portlandzementklinker eine Korngröße von 0,06 bis 4 mm aufweist.

6. Trockenmörtelgemisch nach Anspruch 4, dadurch gekennzeichnet, daß der grobkörnige Portlandzementklinker eine Korngröße von 0,1 bis 1 mm aufweist.

7. Trockenmörtelgemisch nach einem der Ansprüche 1 bis 6, dadurch gekennzeichnet, daß es als anorganisches Bindemittel ein Gemisch von 30 bis 95% Zement mit 70 bis 5% Kalk enthält.

8. Trockenmörtelgemisch nach Anspruch 7, dadurch gekennzeichnet, daß es als anorganisches Bindemittel ein Gemisch von 50 bis 90% Zement mit 50 bis 10% Kalk enthält.

9. Trockenmörtelgemisch nach Anspruch 7, dadurch gekennzeichnet, daß es als anorganisches Bindemittel ein Gemisch von 65 bis 90% Zement mit 35 bis 10% Kalk enthält.

## Revendications

1. Mélange de mortier sec pour la formation de revêtements protégeant contre la corrosion sur des surfaces verticales, horizontales ou obliques d'ouvrages en béton, consistant en au moins un liant inorganique hydraulique ou non hydraulique, ainsi qu'éventuellement en au moins un granulat habituel, une résine pulvérulente dispersée dans un liquide ou présentée sous forme liquide, un additif augmentant la résistance au gel et au sel de déverglaçage, un additif colorant, des fibres et/ou d'autres additifs habituels, comme, par exemple, des pouzzolanes naturelles ou synthétiques, du laitier de haut fourneau et/ ou des additifs habituels pour le béton, caractérisé en ce qu'il contient, en plus du liant inorganique, 2 à 75% en poids, sur la base de la masse du mélange de mortier sec, d'un clinker Portland en gros grains ayant une teneur en silicate dicalcique de plus de 30%.

# EP 0 248 791 B1

2. Mélange de mortier sec suivant la revendication 1, caractérisé en ce que le clinker Portland en gros grains a une teneur en silicate dicalcique de plus de 45%.

3. Mélange de mortier sec suivant la revendication 1 ou 2, caractérisé en ce que le clinker Portland a une teneur en silicate dicalcique de plus de 55%.

4. Mélange de mortier sec suivant l'une quelconque des revendications 1 à 3, caractérisé en ce que le clinker Portland en gros grains a une granulométrie de 0,06 à 8 mm.

5. Mélange de mortier sec suivant la revendication 4, caractérisé en ce que le clinker Portland en gros grains a une granulométrie de 0,06 à 4 mm.

6. Mélange de mortier sec suivant la revendication 4, caractérisé en ce que le clinker Portland en gros grains a une granulométrie de 0,1 à 1 mm.

7. Mélange de mortier sec suivant l'une quelconque des revendications 1 à 6, caractérisé en ce qu'il contient comme liant inorganique un mélange de 30 à 95% de ciment avec 70 à 5% de chaux.

8. Mélange de mortier sec suivant la revendication 7, caractérisé en ce qu'il contient comme liant inorganique un mélange de 50 à 90% de ciment avec 50 à 10% de chaux.

9. Mélange de mortier sec suivant la revendication 7, caractérisé en ce qu'il contient comme liant inorganique un mélange de 65 à 90% de ciment avec 35 à 10% de chaux.

## Claims

1. A dry mortar mixture for forming corrosion resistant coatings on vertical, horizontal or inclined surfaces of concrete constructions, consisting of at least one inorganic, hydraulic or non-hydraulic bonding agent and, optionally, of at least one conventional aggregate of a plastic that is in powder form, dispersed in liquid, or in liquid form; of an additive that increases resistance to frost or ice-melting salt; a colouring additive; fibres and/or additional conventional additives such as, for example, natural or artificial pozzuolanes, blast furnace slags and/or conventional concrete additives, characterized in that in addition to the inorganic bonding agent, it contains 2 to 75% by weight, relatively to the mass of the dry mortar mixture, of a coarse grain portland cement klinker with a dicalcium silicate content of more than 30%.

2. A dry mortar mixture as in Claim 1, characterized in that the coarse grain portland cement klinker has a dicalcium silicate content of more than 45%.

3. A dry mortar mixture as in Claim 1 or Claim 2, characterized in that the portland cement klinker has a dicalcium silicate content of more than 55%.

4. A dry mortar mixture as in one of the Claims 1 to 3, characterized in that the coarse grain portland cement klinker has a grain size of from 0,06 to 8 mm.

5. A dry mortar mixture as in Claim 4, characterized in that the coarse grain portland cement klinker has a grain size of from 0,06 to 4 mm.

6. A dry mortar mixture as in Claim 4, characterized in that the coarse grain portland cement klinker has a grain size of from 0,1 to 1 mm.

7. A dry mortar mixture as in one of the Claims 1 to 6, characterized in that it contains a mixture of from 30 to 95% cement with 70 to 5% lime as inorganic bonding agent.

8. A dry mortar mixture as in Claim 7, characterized in that it contains a mixture of from 50 to 90% cement with 50 to 10% lime as inorganic bonding agent.

9. A dry mortar mixture as in Claim 7, characterized in that it contains a mixture of from 65 to 90% cement with 35 to 10% lime as inorganic bonding agent.